(19) Europäisches Patentamt
European Patent Office
Office européen des brevets

(11) **EP 3 538 937 B1**

(12) **FASCICULE DE BREVET EUROPEEN**

(45) Date de publication et mention
de la délivrance du brevet:
**02.12.2020 Bulletin 2020/49**

(51) Int Cl.:
***G02B 6/42*** *(2006.01)*  ***G02B 6/12*** *(2006.01)*

(21) Numéro de dépôt: **17808100.6**

(86) Numéro de dépôt international:
**PCT/FR2017/053067**

(22) Date de dépôt: **10.11.2017**

(87) Numéro de publication internationale:
**WO 2018/087485 (17.05.2018 Gazette 2018/20)**

(54) **PROCÉDÉ DE RÉALISATION COLLECTIVE D'UNE PLURALITÉ DE PUCES OPTOÉLECTRONIQUES**

VERFAHREN ZUR GEMEINSAMEN HERSTELLUNG EINER VIELZAHL VON OPTOELEKTRONISCHEN CHIPS

METHOD FOR THE COLLECTIVE PRODUCTION OF A PLURALITY OF OPTOELECTRONIC CHIPS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.11.2016 FR 1660967**

(43) Date de publication de la demande:
**18.09.2019 Bulletin 2019/38**

(73) Titulaire: **Commissariat à l'Energie Atomique et aux Energies Alternatives
75015 Paris (FR)**

(72) Inventeurs:
• **MENEZO, Sylvie
38500 Voiron (FR)**
• **FOURNEL, Frank
38190 Villard-Bonnot (FR)**

(74) Mandataire: **INNOV-GROUP
310, avenue Berthelot
69372 Lyon Cedex 08 (FR)**

(56) Documents cités:
**EP-A1- 1 151 962  EP-A1- 1 621 906
EP-A2- 1 873 583  WO-A1-00/73090
WO-A1-2016/011002  WO-A2-99/18612
WO-A2-03/042741  US-A1- 2005 236 700**

**Description**

**DOMAINE TECHNIQUE**

Le domaine de l'invention est celui des procédés de réalisation collective d'une pluralité de puces optoélectroniques, par une technique de report de vignettes sur un substrat de réception fonctionnalisé.

**ÉTAT DE LA TECHNIQUE ANTÉRIEURE**

La réalisation de puces optoélectroniques comportant des diodes aptes à émettre ou détecter un rayonnement électromagnétique peut être effectuée de manière collective, par une technique de report de plots réalisés à base d'un composé semiconducteur, également appelés vignettes, sur un substrat de réception.

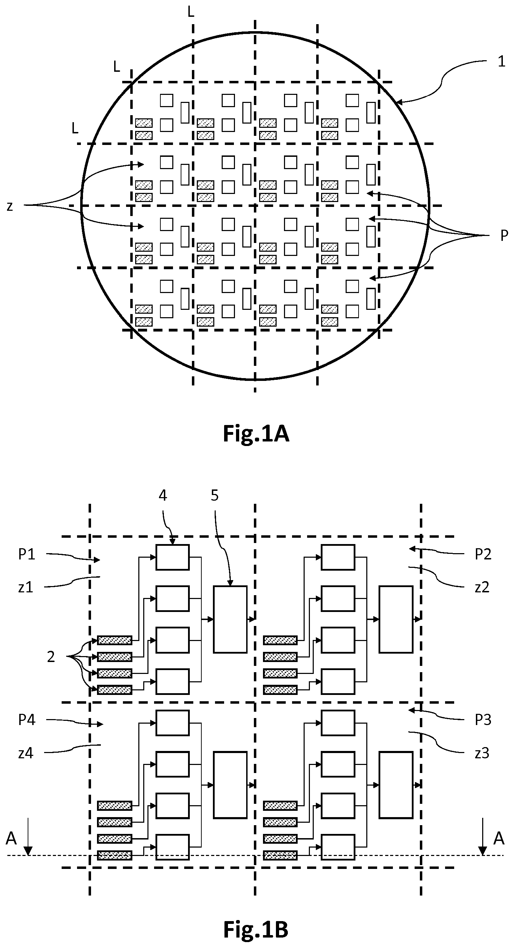

La figure 1A illustre de manière schématique, en vue de dessus, un exemple de puces optoélectroniques P réalisées sur un substrat de réception 1 de type SOI. Les traits pointillés représentent des lignes de découpe L d'une étape ultérieure d'individualisation des puces optoélectroniques P par découpe du substrat de réception 1. Les lignes de découpe L délimitent ainsi des zones élémentaires z du substrat de réception 1 au niveau desquelles sont réalisées les puces optoélectroniques P. Chaque zone élémentaire z comporte ici des composants photoniques actifs (diodes, modulateurs...) et passifs (guides d'onde, multiplexeurs...) couplés optiquement les uns aux autres de manière à former un circuit photonique.

La figure 1B illustre en détail quatre puces optoélectroniques adjacentes P1, P2, P3, P4 représentées sur la fig.1A. Les puces optoélectroniques P1, P2, P3, P4 sont ici des transmetteurs comportant chacun un réseau de plusieurs diodes laser 2 réalisées à base d'un composé semiconducteur, par exemple de l'InP, sous la forme d'un empilement de couches semiconductrices comportant ici majoritairement de l'INP, chaque diode laser étant couplée optiquement à un guide d'onde dit de couplage (représenté ici par une flèche partant de la diode laser 2), intégré dans le substrat de réception 1, qui permet la propagation du mode optique émis par la diode laser 2 vers un modulateur 4 puis vers un multiplexeur 5. Bien entendu, les circuits photoniques intégrés peuvent être différents de ceux représentés sur cette figure, et peuvent notamment comporter d'autres composants photoniques, par exemple des coupleurs vers des fibres optiques. Les puces optoélectroniques peuvent également être des récepteurs à photodiodes, ou des transmetteurs-récepteurs (*transceivers*, en anglais) comportant à la fois des diodes laser et des photodiodes.

Un procédé de réalisation collective des puces optoélectroniques peut comporter une étape de report d'une pluralité de plots sur le substrat de réception au niveau des différentes zones élémentaires. Chaque plot comporte une portion semiconductrice réalisée à base d'un composé semiconducteur, par exemple un composé III-V, et est alors appelé vignette III-V. La portion semiconductrice peut ainsi être réalisée en un empilement de plusieurs couches semiconductrices. Le report est effectué de sorte que les vignettes III-V soient déposées dans des zones élémentaires distinctes, de manière à ce que chaque vignette III-V recouvre une partie dite de couplage d'au moins un guide d'onde de couplage de la zone correspondante. Les vignettes III-V peuvent notamment être collées au substrat de réception par adhérence moléculaire. Une étape de structuration des vignettes III-V est ensuite effectuée pour réaliser, par lithographie et gravure, une pluralité de composants optoélectroniques, tels que des diodes laser, des photodiodes voire des modulateurs à électro-absorption, chaque composant optoélectronique étant en regard de la partie de couplage d'un guide d'onde, et donc couplé optiquement à ce dernier. Les puces optoélectroniques sont ensuite individualisées par découpe du substrat de réception.

La demande WO2016/011002 décrit la réalisation de circuits intégrés photoniques par report, de *type flip chip*, d'une vignette semi-conductrice sur un substrat fonctionnalisé réalisé à base de silicium.

Il existe cependant un besoin pour réduire le coût de fabrication des puces optoélectroniques sans toutefois complexifier le procédé de réalisation.

**EXPOSÉ DE L'INVENTION**

L'invention a pour objectif de remédier au moins en partie aux inconvénients de l'art antérieur, et plus particulièrement de proposer un procédé de réalisation collective de puces optoélectroniques qui permet de diminuer les coûts de fabrication. Pour cela, l'objet de l'invention est un procédé de réalisation collective d'une pluralité de puces optoélectroniques, comportant les étapes suivantes :

- fourniture d'un substrat de réception, comportant une pluralité de zones dites élémentaires destinées à délimiter chacune une puce optoélectronique, chaque zone élémentaire comportant au moins un guide d'onde dit de couplage, intégré dans le substrat de réception, destiné à être couplé optiquement à un premier composant optoélectronique ;

- report d'une pluralité de plots sur les zones élémentaires, de sorte que les plots recouvrent partiellement les guides d'onde de couplage ;

- réalisation desdits premiers composants optoélectronique à partir desdits plots, de sorte que chaque premier composant optoélectronique soit en regard d'au moins un guide d'onde de couplage de la zone élémentaire correspondante.

Selon l'invention, à la suite de l'étape de report, chaque plot s'étend sur un ensemble d'au moins deux zones élémentaires adjacentes, de manière à recouvrir partiellement au moins un guide d'onde de couplage de chacune desdites zones élémentaires adjacentes.

Certains aspects préférés mais non limitatifs de ce procédé sont les suivants.

Ainsi, lors de l'étape de réalisation des premiers composants optoélectroniques, chacun des premiers composants optoélectroniques réalisés à partir d'un même plot peut être situé en regard d'un des guides d'onde de couplage des zones élémentaires adjacentes dudit même ensemble.

Au moins un premier composant optoélectronique d'une première zone élémentaire et au moins un deuxième composant optoélectronique d'une deuxième zone élémentaire adjacente à la première zone élémentaire et appartenant audit même ensemble, lesdits premier et deuxième composants optoélectroniques, étant réalisés à partir d'un même plot, peuvent être respectivement espacés d'une distance égale d'une ligne de séparation, formant une bordure commune auxdites première et deuxième zones élémentaires adjacentes. Ladite distance peut être inférieure à 600 $\mu$m.

Ledit premier composant optoélectronique et ledit deuxième composant optoélectronique peuvent être espacés l'un de l'autre d'une distance inférieure à 1,2 $\mu$m.

Un premier composant optoélectronique peut être situé en regard d'une portion de couplage d'un premier guide d'onde de couplage d'une première zone élémentaire d'un ensemble, et un deuxième composant optoélectronique peut être situé en regard d'une portion de couplage d'un deuxième guide d'onde de couplage d'une deuxième zone élémentaire adjacente à la première zone élémentaire et appartenant audit même ensemble, les premier et deuxième guides d'onde de couplage s'étendant, à partir de leurs parties de couplage respectives, de manière parallèle.

Lesdits premier et deuxième guides d'onde de couplage peuvent s'étendre, à partir de leurs parties de couplage respectives, suivant des directions opposées l'une à l'autre.

Lesdits premier et deuxième guides d'onde de couplage peuvent s'étendre, à partir de leurs parties de couplage respectives, suivant des directions parallèles l'une à l'autre.

Le premier guide d'onde de couplage et le deuxième guide d'onde peuvent s'étendre, à partir de leurs parties de couplage respectives, de manière à présenter, l'un vis-à-vis de l'autre, une symétrie axiale par rapport à ladite ligne de séparation.

Chaque plot peut s'étendre sur un ensemble de quatre zones élémentaires adjacentes deux à deux.

Chaque plot peut comporter une portion semiconductrice réalisée à base d'un composé semiconducteur, et un substrat de croissance à partir duquel est réalisée par épitaxie la portion semiconductrice.

Le procédé peut comporter une étape de suppression du substrat de croissance, celui-ci étant réalisé en un alliage à base dudit composé semiconducteur.

Chaque plot peut comporter une portion semi-conductrice réalisée à base d'un composé semiconducteur III-V.

Le premier composant optoélectronique peut être une source laser, une photodiode ou un modulateur électro-optique.

Chaque zone élémentaire dudit ensemble peut comporter un réseau de plusieurs guides d'onde de couplage, et un réseau de plusieurs premiers composants optoélectroniques peut être réalisé pour chacune des zones élémentaires dudit ensemble, de sorte que les premiers composants optoélectroniques d'un même réseau soient respectivement en regard des guides d'onde de couplage correspondants.

Le procédé peut comporter une étape de report d'une pluralité de premiers plots à partir desquels est réalisée une pluralité de diodes laser et une étape de report d'une pluralité de deuxièmes plots à partir desquels est réalisée une pluralité de photodiodes ou une pluralité de modulateurs électro-optique.

Le procédé peut comporter une étape ultérieure de découpe du substrat de réception suivant des lignes de découpe passant entre les zones élémentaires, de manière à obtenir une pluralité de puces optoélectroniques distinctes les unes des autres.

## BRÈVE DESCRIPTION DES DESSINS

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :

la figure 1A, déjà décrite en référence à l'art antérieur, illustre de manière schématique, en vue de dessus, un exemple de puces optoélectroniques formées au niveau d'un substrat de réception; et la figure 1B, déjà décrite, est une vue détaillée de quatre puces optoélectroniques adjacentes illustrées sur la fig. 1A ;

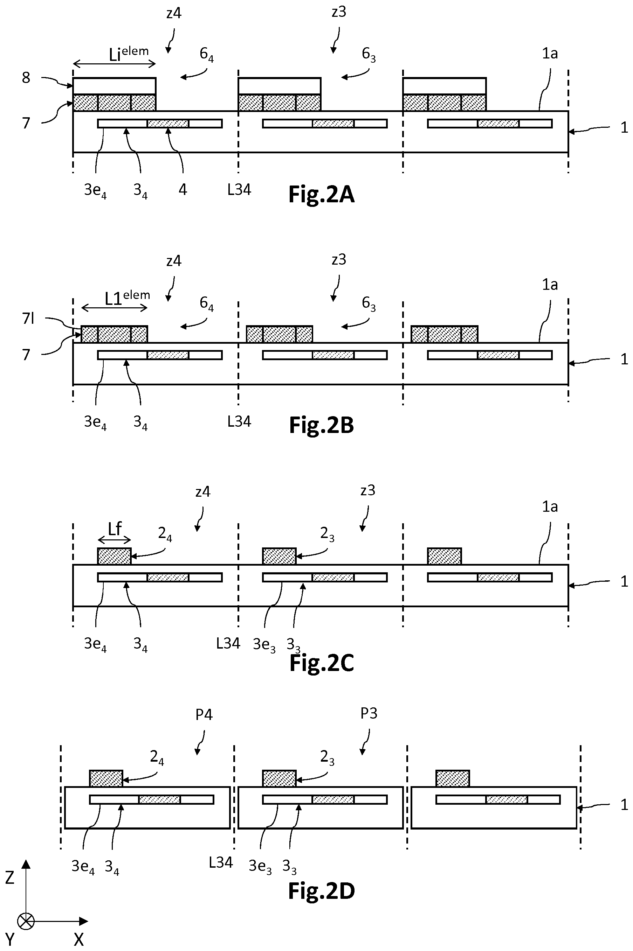

les figures 2A à 2D illustrent de manière partielle et schématique, en coupe transversale selon la ligne A-A de la fig. 1B, différentes étapes d'un procédé conventionnel de réalisation collective de puces optoélectroniques ;

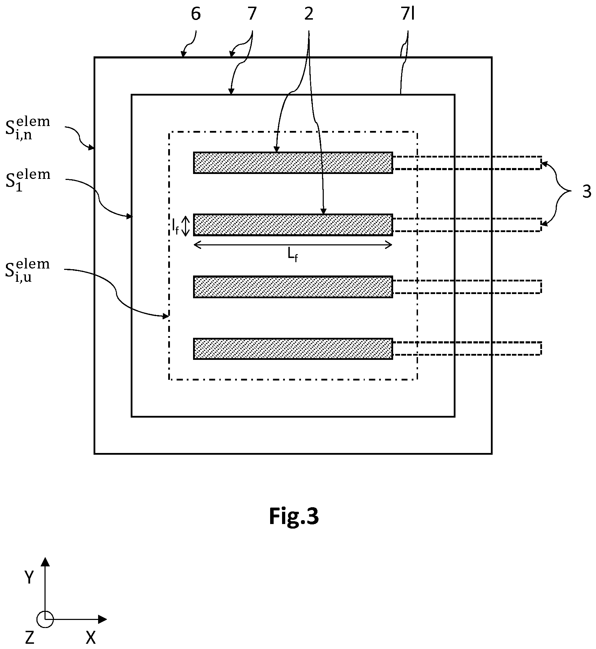

la figure 3 illustre de manière partielle et schématique, en vue de dessus, la surface que présente une vignette au cours de différentes étapes du procédé conventionnel décrit précédemment, permettant la réalisation, pour une zone élémentaire, d'un réseau de quatre diodes laser couplées à des guides d'onde de couplage ;

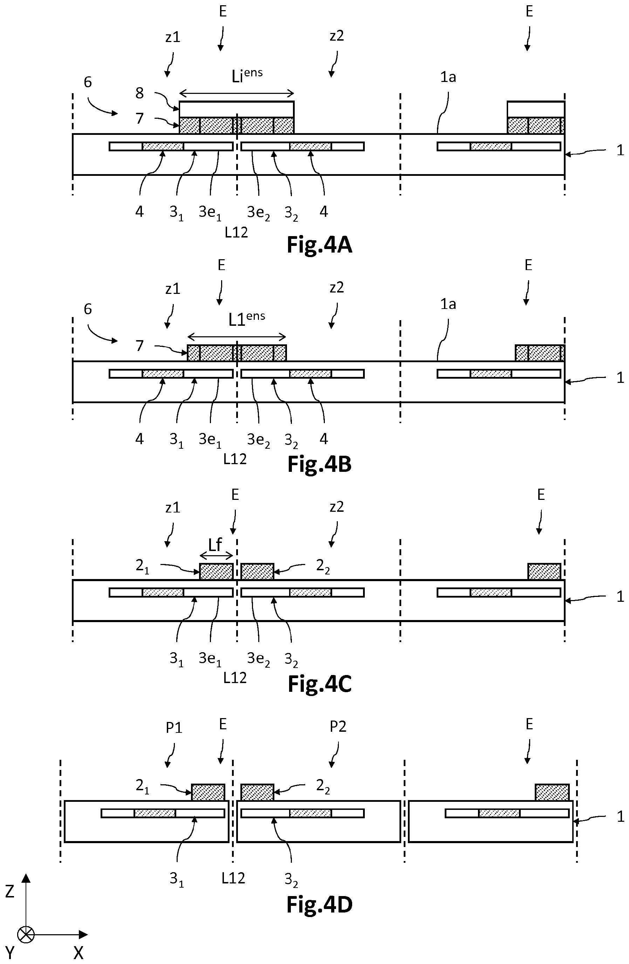

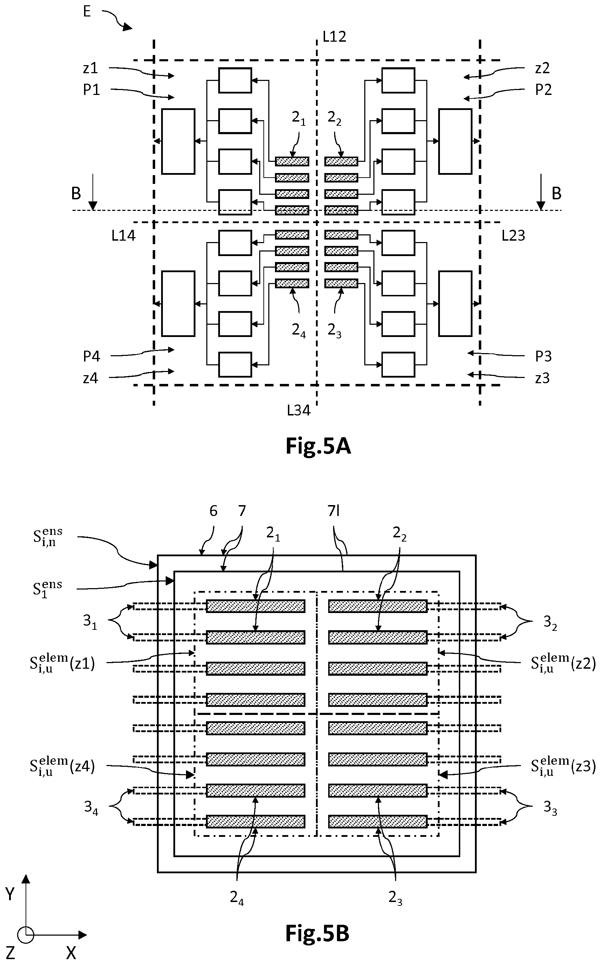

les figures 4A à 4D illustrent de manière partielle et schématique, en coupe transversale selon la ligne B-B de la fig. 5A, différentes étapes d'un procédé de réalisation collective de puces optoélectroniques selon un mode de réalisation de l'invention ;

la figure 5A illustre de manière partielle et schématique, en vue de dessus, un exemple de quatre puces optoélectroniques réalisées sur un substrat de réception par le procédé décrit en référence aux fig. 4A à 4D ;

la figure 5B illustre de manière partielle et schématique, en vue de dessus, la surface que présente une vignette au cours de différentes étapes du procédé illustré en référence aux fig. 4A à 4D, permettant la réalisation, à partir d'une même vignette, de plusieurs réseaux de diodes laser d'un ensemble de quatre zones élémentaires adjacentes ;

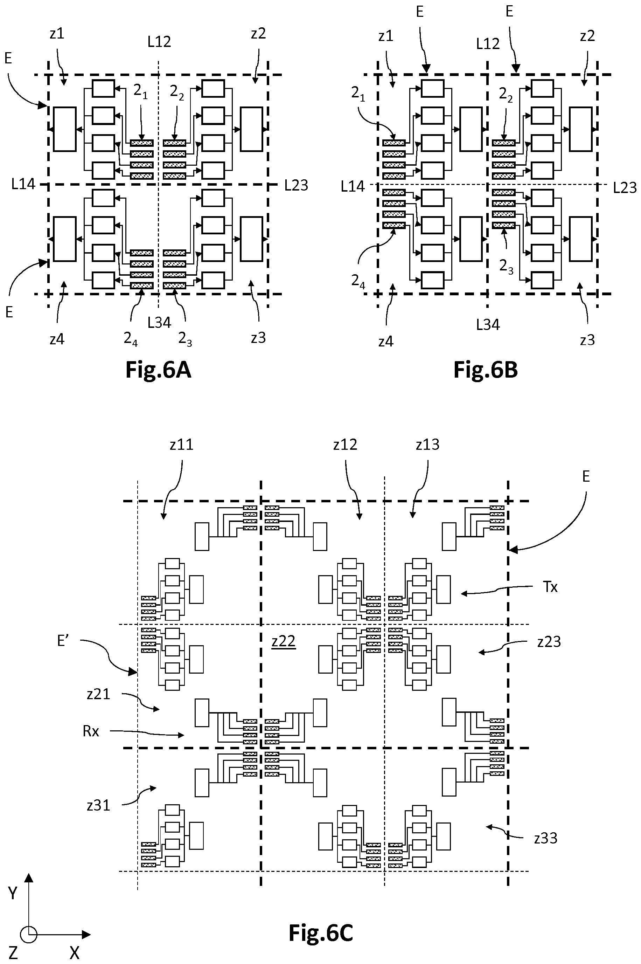

les figures 6A, 6B et 6C illustrent de manière partielle et schématique, en vue de dessus, différentes variantes de puces optoélectroniques réalisées sur un substrat de réception, dans lesquelles les réseaux de diodes laser d'un ensemble de zones élémentaires adjacentes sont obtenus à partir d'une même vignette III-V.

**EXPOSÉ DÉTAILLÉ DE MODES DE RÉALISATION PARTICULIERS**

Sur les figures et dans la suite de la description, les mêmes références représentent les éléments identiques ou similaires. De plus, les différents éléments ne sont pas représentés à l'échelle de manière à privilégier la clarté des figures. Par ailleurs, les différents modes de réalisation et variantes ne sont pas exclusifs les uns des autres et peuvent être combinés entre eux. Sauf indication contraire, les termes « sensiblement », « environ », « de l'ordre de » signifient à 10% près.

L'invention porte sur la réalisation collective de puces optoélectroniques, par une technique de report de plots, également appelés vignettes, sur un substrat de réception fonctionnalisé.

Par puce optoélectronique, on entend un dispositif comportant au moins un premier composant optoélectronique apte à émettre, détecter, voire moduler un rayonnement électromagnétique, réalisé à base d'un composé semiconducteur donné, qui repose sur le substrat de réception. Le premier composant optoélectronique est dit réalisé à base du composé semiconducteur donné dans le sens où il comporte majoritairement ledit composé semiconducteur. Il peut comporter un empilement de couches minces réalisées en différents alliages constitués ou comportant ledit composé semiconducteur. Chaque puce comporte en outre des composants photoniques passifs et/ou actifs. Chaque premier composant optoélectronique est couplé optiquement à un guide d'onde dit de couplage, intégré dans le substrat de réception, qui forme au moins une partie d'un circuit photonique. Les puces optoélectroniques sont réalisées au niveau de zones dites élémentaires d'un substrat de réception, les zones élémentaires formant des surfaces distinctes les unes des autres du substrat. Le circuit photonique d'une puce optoélectronique pouvant être réalisé à partir d'un motif élémentaire identique ou similaire à chacune des puces optoélectroniques. Le motif élémentaire peut ainsi être défini au niveau d'un masque utilisé lors d'étapes de photolithographie.

Les plots, ou vignettes, comportent chacun une portion semiconductrice réalisée par croissance épitaxiale à partir d'un substrat de croissance. La portion semiconductrice est réalisée à base du composé semiconducteur mentionné précédemment, et est destinée à permettre la réalisation d'un ou de plusieurs premiers composants optoélectroniques. Les plots peuvent présenter une surface, dans le plan parallèle au plan du substrat de réception, de l'ordre de quelques millimètres carrés, et une épaisseur de l'ordre de quelques dizaines de microns à quelques centaines de microns. Le composé semiconducteur est de préférence de type III-V, c'est-à-dire qu'il est un alliage comportant au moins un élément de la colonne III et au moins un élément de la colonne V du tableau périodique. Le composé semiconducteur peut être, par exemple, de l'InP ou de GaAs. Les vignettes sont alors dites vignettes III-V.

La portion semiconductrice peut être une hétérostructure comportant un empilement d'une première couche dopée N, et une deuxième couche dopée P, agencées l'une par rapport à l'autre de manière à former une jonction PN ou PIN, entre lesquelles peut être située au moins une couche intermédiaire formant un puits quantique, éventuellement intercalée entre des couches barrières. La ou les puits quantiques et les couches barrières sont intrinsèques, c'est-à-dire non intentionnellement dopés, et sont réalisés à base du composé semiconducteur. A titre d'exemples, l'hétérostructure peut être du type InGaAsP/InP, InAlGaAs/InP, AlInGaAs/GaAs, ou autre. Ainsi, dans le cas d'un composé semiconducteur en InP, les couches dopées peuvent être en InP, les puits quantiques en InAsP et les couches barrières en InGaAsP.

Le substrat de réception est dit fonctionnalisé dans le sens où il comporte au moins un composant optique passif de transmission, à savoir un guide d'onde de couplage, intégré dans le substrat, c'est-à-dire réalisé au niveau de ou sous la face avant du substrat de réception. Il peut également comporter d'autres composants optiques passifs (multiplexeurs ou démultiplexeurs, coupleurs à fibre optique...) et/ou des composants optiques actifs (modulateurs...), optiquement couplés les uns aux autres de manière à former un circuit photonique dit intégré. Le substrat de réception peut être de type SOI, c'est-à-dire qu'il peut comporter une couche mince superficielle de silicium et une couche massive en silicium, entre lesquelles est intercalée une couche d'oxyde de silicium dite BOX (*buried oxide*, en anglais). La couche mince superficielle peut être recouverte d'une couche permettant le collage de la vignette sur la face avant du substrat de réception, par exemple une couche d'oxyde dans le cas d'un collage par adhésion moléculaire.

D'une manière générale, les puces optoélectroniques peuvent être des transmetteurs Tx dans lesquels on retrouve un réseau de diodes laser couplées à des guides d'onde de couplage, ainsi que, par exemple, des modulateurs, au moins un multiplexeur et un coupleur vers une fibre optique. Elles peuvent également être des récepteurs Rx comportant des photodiodes, un démultiplexeur et un coupleur ; voire être des transmetteurs-récepteurs comportant à la fois des diodes laser et des photodiodes. Dans le cadre de l'invention, les puces optoélectroniques sont, à titre purement illustratif, des transmetteurs Tx comportant des diodes laser réalisées à base d'un composé semiconducteur III-V, optiquement couplées à des guides d'onde de couplage d'un circuit photonique, ce dernier étant intégré dans un substrat de réception réalisé à base de silicium, par exemple de type SOI.

Les figures 2A à 2D sont des vues, partielles et schématiques, en coupe selon l'axe A-A illustré sur la figure 1B, de différentes étapes d'un exemple de procédé conventionnel de réalisation de puces optoélectroniques par report de vignettes sur un substrat de réception, et plus particulièrement la réalisation de premiers composants optoélectroniques, ici des diodes laser, couplés optiquement à un circuit photonique intégré. Dans cet exemple, les vignettes sont réalisées à base d'un composé semiconducteur III-V et le substrat de réception est de type SOI. Seules certaines étapes du procédé de réalisation sont illustrées et décrites ici.

On définit ici et pour la suite de la description un repère direct tridimensionnel orthogonal (X,Y,Z), où les axes X et Y forment un plan parallèle au plan de la face avant du substrat de réception, et où l'axe Z est orienté de manière sensiblement orthogonale au plan du substrat de réception.

Dans cet exemple, les vignettes III-V sont des plots distincts les uns des autres comportant une portion semiconductrice réalisée à base d'un composé semiconducteur III-V, par exemple de l'InP ou du GaAs, et est ici formée d'un empilement de couches minces dans lequel le composé semiconducteur III-V est majoritaire. Elles comportent en outre le substrat de croissance à partir duquel sont réalisées les portions semiconductrices respectives. Celui-ci est réalisé en un matériau présentant un bon rapport du paramètre de maille avec celui du composé semiconducteur III-V. Il peut être réalisé en le même composé semiconducteur III-V, par exemple en InP, voire en un alliage comportant les mêmes éléments III et V du composé semiconducteur III-V. A titre illustratif, le substrat de croissance peut être en InP lorsque les vignettes sont du type InGaAsP/InP. Le substrat de réception est réalisé à base de silicium, et peut être un substrat SOI. Il comporte des composants photoniques dits intégrés dans le sens où ils sont situés à l'intérieur du même substrat de réception, et sont ici des guides d'onde de couplage, des modulateurs en silicium, et un multiplexeur en longueurs d'onde en silicium. Les guides de couplage forment un chemin optique entre les diodes et les modulateurs.

La figure 2A illustre une étape de report d'une pluralité de vignettes 6 sur le substrat de réception 1. Chaque vignette 6 comporte une portion semiconductrice 7 et un substrat de croissance 8. Le report est effectué de sorte que la face libre de chaque portion semiconductrice 7, c'est-à-dire la face opposée au substrat de croissance 8, vienne au contact de la face avant 1a du substrat de réception 1. Les vignettes 6 sont ici fixées au substrat de réception 1 par collage moléculaire, au moyen d'une couche d'oxyde (non représentée) située à l'interface entre la vignette 6 et le substrat de réception 1, par exemple une couche d'oxyde de silicium de quelques nanomètres à quelques dizaines de nanomètres d'épaisseur.

Les vignettes 6 sont positionnées chacune dans une zone élémentaire z du substrat de réception 1, à raison ici d'une vignette 6 par zone élémentaire z, bien que, en variante, plusieurs vignettes distinctes puissent être déposées sur une même zone élémentaire. Ici, les vignettes $6_3$ et $6_4$ sont respectivement positionnées dans les zones élémentaires z3 et z4. Les zones élémentaires z sont situées entre les traits en pointillés, et sont destinées à délimiter la surface des puces optoélectroniques P, ici notamment P3 et P4 (fig.2D), qui seront individualisées lors d'une étape ultérieure de découpe du substrat de réception 1.

Dans chaque zone élémentaire z est situé au moins un circuit photonique comportant des composants photoniques dont seuls un guide d'onde de couplage 3 et un modulateur 4 sont ici représentés. Le circuit photonique est ici dit intégré dans la mesure où il comporte plusieurs composants photoniques (un guide 3, un modulateur 4, etc...) fabriqués sur le même substrat de réception 1 et situés à l'intérieur de ce dernier. Ici, dans le cas de la zone élémentaire z4, le circuit photonique comporte un réseau de guides d'onde de couplage $3_4$, chaque guide d'onde de couplage $3_4$ comportant une première partie $3e_4$ dite de couplage, permettant le couplage optique entre les diodes laser $2_4$ et les guides d'onde $3_4$.

Chaque vignette $6_3$, $6_4$ est positionnée dans une zone élémentaire z3, z4 différente, de manière à recouvrir partiellement les guides d'onde de couplage $3_3$, $3_4$ du circuit photonique correspondant, au niveau des parties de couplage $3e_3$, $3e_4$ respectives.

Les vignettes 6 reportées présentent une surface initiale $S_{i,n}^{elem}$, dans le plan XY, par exemple égale à $Li^{elem} \times Li^{elem}$ dans le cas d'un profil carré. La surface initiale $S_{i,n}^{elem}$ dépend du nombre de diodes 2 à réaliser en regard des guides d'onde de couplage 3, et peut être de l'ordre de quelques millimètres carrés. Bien entendu, les vignettes 6 peuvent présenter d'autres types de profil dans le plan XY, par exemple rectangulaire, polygonal, circulaire ou autre.

La figure 2B illustre une étape préférentielle de suppression du substrat de croissance 8. La suppression peut être effectuée par gravure chimique, éventuellement précédée d'un amincissement mécanique. L'épaisseur des vignettes 6 correspond alors sensiblement à celle des portions semiconductrices 7.

Une sur-gravure latérale des portions semiconductrices 7, dans le plan XY, est susceptible de se produire lors de la suppression du substrat de croissance, notamment lorsque le matériau du substrat de croissance 8 est un alliage comportant au moins les mêmes éléments III et V que ceux du composé semiconducteur III-V à base duquel sont formées les portions semiconductrices 7. C'est le cas par exemple lorsqu'un substrat de croissance 8 en InP est utilisé pour la croissance d'une portion semiconductrice 7 à base d'InP, par exemple du type InGaAsP/InP, et que le substrat de croissance 8 est supprimé par gravure chimique à l'acide chlorhydrique.

La portion semiconductrice 7 des vignettes 6 présente alors une surface $S_1^{elem}$ dans le plan XY, par exemple $L1^{elem} \times L1^{elem}$ dans le cas d'un profil carré, inférieure à la surface initiale Si. A titre d'exemple, la portion semiconductrice 7 peut être gravée à partir de sa bordure latérale 7l sur une distance de 300μm environ, ce qui se traduit par : $L1^{elem} = Li^{elem} - 2 \times 300$μm.

La figure 2C illustre une étape suivante de réalisation ici d'un réseau de quatre diodes laser 2 à partir de chaque portion semiconductrice 7. Les diodes laser 2 sont ici des diodes en ruban, qui présentent une longueur Lf suivant l'axe longitudinal X supérieure à une largeur lf suivant l'axe transversal Y, mais d'autres diodes sont possibles, comme par exemple des diodes laser VCSEL (pour *Vertical-Cavity Surface-Emitting Laser*, en anglais). Une telle diode laser 2 en ruban comporte un guide d'onde situé dans la portion semiconductrice 7 qui forme le matériau d'amplification optique (SOA pour *Semiconductor Optical Amplifier*, en anglais), et est agencée en regard suivant l'axe Z d'un guide d'onde de couplage 3 pour permettre le couplage optique entre les deux guides. Un exemple de diode laser en ruban est notamment décrit dans le document EP2811593. Les diodes laser 2 sont réalisées par des étapes classiques de lithographie et de gravure, de sorte que chaque diode laser $2_3$, $2_4$ est située en regard, suivant l'axe Z, d'une partie de couplage $3e_3$, $3e_4$ d'un guide d'onde de couplage $3_3$, $3_4$, de sorte que la diode 2 soit couplée optiquement au guide d'onde de couplage 3 correspondant. Des contacts métalliques (non représentés) sont également réalisés de manière à pouvoir injecter un courant de pompage dans les différentes diodes 2.

La figure 2D illustre l'étape de découpe du substrat de réception 1 suivant les lignes de découpe L, de manière à obtenir une pluralité de puces optoélectroniques P distinctes les unes des autres. Dans cet exemple, les puces P3 et P4 sont obtenues par découpe notamment suivant la ligne L34. La séparation des puces optoélectroniques P peut être effectuée par découpe mécanique et/ou par laser, par gravure chimique, par gravure physique, ou autre.

La figure 3 illustre de manière schématique, en vue de dessus, un réseau de quatre diodes laser 2 en ruban réalisées à partir d'une même vignette 6 et disposées en regard, suivant l'axe Z, de guides d'onde de couplage 3 d'un même circuit photonique, et illustre en particulier la surface dans le plan XY que présente la vignette 6 lors de différentes étapes du procédé conventionnel de réalisation.

Dans cet exemple, les diodes laser 2 en ruban présentent chacune une longueur Lf de 800μm environ suivant l'axe longitudinal X, pour une largeur lf de 50μm environ suivant l'axe transversal Y, et sont espacées les unes des autres d'une distance de 200μm environ suivant l'axe Y, ici de bord à bord. Pour obtenir ces dimensions, les étapes de lithographie et de gravure impliquent généralement de disposer d'une portion semiconductrice 7, et donc d'une vignette 6, d'une surface initiale dite utile $S_{i,u}^{elem}$ de 1x1mm² environ.

Cependant, en pratique, il peut être nécessaire de prévoir une surface initiale dite nécessaire $S_{i,n}^{elem}$ de vignette 6 bien supérieure à la surface initiale utile $S_{i,u}^{elem}$. En effet, il convient de prendre en compte une incertitude de positionnement de la vignette 6, de l'ordre de ±200μm environ, vis-à-vis du ou des guides d'onde de couplage 3 de la zone élémentaire correspondante. De plus, il peut également être nécessaire de prendre en compte une éventuelle sur-gravure latérale de la portion semiconductrice 7 pouvant avoir lieu lors de l'étape de suppression du substrat de croissance 8, qui peut être de l'ordre de 300μm à partir de la bordure latérale 7l de la portion semiconductrice 7.

Ainsi, à titre d'exemple, pour disposer d'une portion semiconductrice 7 d'une surface initiale utile $S_{i,u}^{elem}$ de 1x1mm² environ permettant d'obtenir les diodes laser 2 aux dimensions voulues et correctement positionnées en regard, suivant l'axe Z, des guides d'onde de couplage 3 respectifs, il peut être nécessaire de reporter une vignette 6 d'une surface initiale nécessaire $S_{i,n}^{elem}$ de 2x2mm² environ, soit 4mm². En effet, une vignette 6 d'une surface $S_{i,n}^{elem}$ de 4mm² peut fournir une portion semiconductrice 7 d'une surface $S_1^{elem}$ de 1,4x1,4=2,0mm² environ, après suppression du substrat de croissance 8 et sur-gravure latérale du matériau de la portion semiconductrice 7, cette surface correspondant alors à la surface initiale utile $S_{i,u}^{elem}$ de 1x1mm² augmentée de 200μm au niveau de la bordure latérale 7l dans le plan XY, pour prendre en compte l'incertitude de positionnement.

Ainsi, il en résulte que, d'une manière générale, il est nécessaire de prévoir une surface initiale nécessaire $S_{i,n}^{elem}$ de matériau de la portion semiconductrice 7 bien plus important que la surface initiale utile $S_{i,u}^{elem}$, de l'ordre de 4 fois plus important dans cet exemple, ce qui se traduit par des coûts élevés de fabrication. De plus, il en résulte une perte de matériau de la portion semiconductrice 7 entre la surface initiale nécessaire $S_{i,n}^{elem}$ et la surface initiale utile $S_{i,u}^{elem}$ de l'ordre de 75% dans cet exemple.

Pour réduire les coûts de fabrication, le procédé selon l'invention propose d'utiliser une même vignette pour la réalisation de premiers composants optoélectroniques d'un ensemble E de plusieurs puces optoélectroniques adjacentes, ce qui se traduit par une diminution de la surface initiale nécessaire vis-à-vis de la surface initiale utile, rapportée à chaque zone élémentaire de puce optoélectronique, ainsi que par une diminution du volume perdu du matériau de la portion semiconductrice des vignettes.

Pour cela, chaque vignette est reportée sur le substrat de réception de manière à s'étendre sur un ensemble E d'au moins deux zones élémentaires adjacentes, et de préférence sur un ensemble E de quatre zones élémentaires adjacentes deux à deux, recouvrant ainsi partiellement au moins un guide d'onde de couplage de chacune desdites zones élémentaires adjacentes. Lors de l'étape de réalisation des premiers composants optoélectroniques, lesdits premiers composants réalisés à partir d'une même vignette peuvent ainsi être situés en regard, suivant l'axe Z, des guides d'onde de couplage respectifs desdites zones élémentaires adjacentes, de sorte que chaque premier composant optoélectronique soit couplé optiquement au guide d'onde de couplage correspondant.

Comme détaillé plus loin, les réseaux de premiers composants optoélectroniques d'un ensemble E de deux zones élémentaires adjacentes sont agencés de manière à être situés à proximité d'une ligne de séparation, ou de découpe. Il en est de même pour les réseaux de guides d'onde de couplage, au niveau de leurs parties de couplage. D'une manière générale, une ligne de séparation passe entre deux zones élémentaires adjacentes, et forme une bordure qui est commune à ces deux zones élémentaires adjacentes. Les réseaux de premiers composants optoélectroniques peuvent en outre être espacés, vis-à-vis de cette ligne de séparation, d'une distance identique, avantageusement inférieure à $600\mu m$, par exemple inférieure ou égale à $300\mu m$. Ils sont espacés l'un de l'autre d'une distance supérieure par exemple à $10\mu m$, par exemple supérieure ou égale à $50\mu m$. Par ailleurs, ils peuvent présenter, l'un vis-à-vis de l'autre, une symétrie miroir par rapport au plan formé par ladite ligne de séparation (parallèle ici à l'axe X ou Y) et l'axe d'épaisseur Z.

Les figures 4A à 4D illustrent un exemple de procédé de réalisation de puces optoélectroniques P permettant de limiter la surface initiale de matériau semiconducteur nécessaire à la réalisation des diodes 2 de chaque puce optoélectronique P, et donc de limiter les coûts de fabrication. Les figures sont des vues schématiques et partielles de puces optoélectroniques P1, P2 adjacentes, pour différentes étapes du procédé, suivant le plan de coupe B-B de la figure 5A. Dans cet exemple, les vignettes 6 et le substrat de réception 1 sont similaires, en termes de matériau, à ceux de l'exemple des fig.2A à 2D. Les premiers composants optoélectroniques sont ici des diodes laser.

La figure 4A illustre l'étape de report de vignettes 6 sur le substrat de réception 1. Chaque vignette 6 comporte une portion semiconductrice 7 à base du composé semiconducteur III-V, par exemple une hétérostructure à base d'InP formant une jonction PN ou PIN, dont la face libre est mise au contact de la face avant 1a du substrat de réception 1. Elle comporte également le substrat de croissance 8 à partir duquel la portion semiconductrice 7 a été réalisée par croissance épitaxiale.

Ici, chaque vignette 6 est reportée sur le substrat de réception 1 de sorte qu'elle s'étend sur un ensemble E d'au moins deux zones élémentaires adjacentes, et dans cet exemple sur un ensemble E de quatre zones élémentaires adjacentes deux à deux, ici z1, z2, z3, z4 dans l'exemple de la fig. 5A. Elle recouvre ainsi au moins un guide d'onde de couplage 3 du circuit photonique, et ici un réseau de quatre guides d'onde de couplage 3, de chacune des zones élémentaires adjacentes z1, z2, z3, z4 dudit ensemble E. Chaque vignette 6 s'étend ainsi continûment sur une partie des quatre zones élémentaires adjacentes, sans rupture de matériau de la vignette entre les différentes zones adjacentes.

Chaque vignette 6 présente une surface initiale nécessaire $S_{i,n}^{ens}$, par exemple de dimensions Li$^{ens}$ x Li$^{ens}$ dans le cas d'une section carrée dans le plan XY, où Li$^{ens}$ est une dimension de la vignette 6 dans le plan XY. La surface initiale $S_{i,n}^{ens}$ est adaptée de manière à recouvrir les guides d'onde de couplage 3, au niveau de leurs parties de couplage 3e respectives, de chaque zone élémentaire adjacente z1, z2, z3, z4 du même ensemble E.

La figure 4B illustre une étape préférentielle de suppression du substrat de croissance 8. Comme précédemment, la suppression peut être effectuée par gravure chimique, éventuellement précédée d'un amincissement mécanique. L'épaisseur des vignettes 6 est alors réduite de manière à égaler sensiblement celle des portions semiconductrices 7.

Dans le cas d'une sur-gravure latérale de la portion semiconductrice 7 des vignettes 6, la portion semiconductrice 7 présente alors une surface $S_1^{ens}$ dans le plan XY, par exemple Li$^{ens}$ x L1$^{ens}$ dans le cas d'un profil carré, inférieure à la surface $S_{i,n}^{ens}$. A titre d'exemple, la bordure latérale 7l de la portion semiconductrice 7 peut être gravée sur une largeur de $300\mu m$ environ, autrement

dit : $L1^{ens} = Li^{ens} - 2 \times 300\mu m$.

La figure 4C illustre une étape de structuration de la portion semiconductrice 7 pour réaliser au moins une diode $2_1$, $2_2$, $2_3$, $2_4$ pour chaque zone élémentaire adjacente z1, z2, z3, z4 du même ensemble E. Dans cet exemple, à partir de la même portion semiconductrice 7, on réalise un réseau de plusieurs diodes laser 2 pour chacun des circuits photoniques des zones élémentaires adjacentes z1, z2, z3, z4 du même ensemble E.

Les diodes laser 2 sont ici également des diodes laser 2 en ruban, qui présentent une longueur Lf suivant l'axe longitudinal X et une largeur lf suivant l'axe transversal Y. Les diodes laser 2 sont réalisées par des étapes classiques de lithographie et de gravure, de sorte que chaque diode laser 2 soit située en regard, suivant l'axe Z, de la partie de couplage 3e d'un guide d'onde de couplage 3 du circuit photonique de la zone élémentaire correspondante.

La figure 4D illustre l'étape de découpe du substrat de réception 1 suivant les lignes de découpe L, de manière à obtenir une pluralité de puces optoélectroniques P distinctes les unes des autres.

Comme il sera montré en référence à l'exemple des figures 5A et 5B, l'utilisation d'une même vignette 6 pour la réalisation des diodes 2 d'un ensemble E de zones élémentaires adjacentes permet de diminuer la surface initiale nécessaire de matériau semiconducteur par zone élémentaire, et donc de réduire les coûts de fabrication.

La figure 5A illustre de manière schématique un ensemble E de puces optoélectroniques P1, P2, P3, P4 adjacentes deux à deux, réalisées à partir du procédé de réalisation décrit en référence aux fig. 4A à 4D. La figure 5B est une vue schématique qui illustre en détail les premiers composants optoélectroniques 2, ici des diodes laser, d'un ensemble E de plusieurs puces optoélectroniques P1, P2, P3, P4 adjacentes deux à deux, ainsi que les différentes surfaces que présente la vignette 6 au cours du procédé de réalisation.

Ici, un ensemble E de quatre puces optoélectroniques P1, P2, P3, P4 adjacentes deux à deux sont formées sur le substrat de réception. Elles sont distinctes les unes des autres au niveau des lignes de découpe L12, L23, L34, L14, ou ligne de séparation, schématisées par les traits en pointillés. Dans cet exemple, chaque puce optoélectronique P1, P2, P3, P4 comporte un réseau de plusieurs diodes laser $2_1$, $2_2$, $2_3$, $2_4$ couplées à un circuit photonique comportant des composants photoniques intégrés dans le substrat de réception, tels que des guides d'onde, des modulateurs, et un multiplexeur en longueurs d'onde.

Le circuit photonique comporte ainsi un réseau de plusieurs guides d'onde de couplage (représentés ici par des flèches partant des diodes), dont les parties de couplage sont situées en regard, suivant l'axe Z, des diodes laser 2 (fig.4A), de sorte que chaque diode laser 2 est couplée optiquement au guide d'onde de couplage 3 correspondant. Chaque circuit photonique comporte ici des chemins optiques formés chacun d'un guide d'onde de couplage couplé optiquement à une diode laser 2 et couplant chaque diode laser 2 à un modulateur, ainsi que chaque sortie d'un modulateur à une entrée du multiplexeur en longueurs d'onde.

Dans la mesure où les réseaux de diodes laser 2 des zones élémentaires adjacentes z1, z2, z3, z4 ont été réalisés à partir d'une même vignette 6, ils sont situés dans les coins adjacents deux à deux des zones élémentaires z1, z2, z3, z4 du même ensemble E. Plus précisément, le réseau de diodes 2 d'une zone élémentaire dudit ensemble E, par exemple de la zone z1, est situé dans un coin adjacent des trois autres zones élémentaires z2, z3, z4 dudit ensemble E.

Par ailleurs, au moins une première diode d'une première zone élémentaire et au moins une deuxième diode d'une deuxième zone élémentaire adjacente dudit ensemble E, lesdites première et deuxième diodes étant réalisées à partir d'une même vignette, sont situées à proximité de la ligne de séparation formant une bordure commune auxdites première et deuxième zones élémentaires adjacentes. Les première et deuxième diodes peuvent être espacées de la ligne de séparation d'une distance égale, celle-ci pouvant être inférieure à $600\mu m$, par exemple inférieure ou égale à $300\mu m$, par exemple égale à $100\mu m$ environ. Cette distance peut être supérieure ou égale à une dizaine de microns, par exemple à $10\mu m$, voire à quelques dizaines de microns, par exemple à $50\mu m$ dans le cas d'une largeur de lame de découpe de $50\mu m$.

Dans l'exemple de la figure 5A, les parties de couplage des guides d'onde de couplage $3_1$ de la zone élémentaire z1 et celles des guides d'onde de couplage $3_2$ de la zone élémentaire z2 sont de préférence situées à proximité de la ligne de séparation L12 formant une bordure commune aux zones élémentaires z1 et z2. Plus précisément, les parties de couplage des guides de couplage $3_1$ de la zone élémentaire z1 peuvent être situées à une distance de la ligne de séparation L12 inférieure à celle les séparant de la ligne de séparation opposée et parallèle à la ligne L12. De même, les parties de couplage des guides de couplage $3_2$ de la zone élémentaire z2 sont situées à une distance de la ligne de séparation L12 inférieure à celle les séparant de la ligne de séparation opposée et parallèle à la ligne L12.

De préférence, les diodes laser $2_1$ de la zone élémentaire z1 sont situées à une même distance de la ligne de séparation L12 que les diodes laser $2_2$ de la zone élémentaire z2. Cette distance correspond à la distance minimale entre une bordure de la diode considérée et la ligne de séparation. Ainsi, les diodes $2_1$ de la zone élémentaire z1 sont espacées des diodes $2_2$ de la zone élémentaire z2 d'une distance, de bord à bord, qui peut être inférieure à $1,2\mu m$, par exemple inférieure ou égale à $600\mu m$, par exemple égale à $200\mu m$ environ. Cette distance est cependant supérieure ou égale à une dizaine de microns, par exemple à $10\mu m$, voire à quelques

dizaines microns, par exemple à 50$\mu$m. On limite ainsi la surface de portion semiconductrice nécessaire à la réalisation des diodes des zones élémentaires adjacentes d'un même ensemble E.

Par ailleurs, les guides d'onde de couplage $3_1$ de la zone élémentaire z1 et ceux $3_2$ de la zone élémentaire z2 sont agencés mutuellement de sorte que les parties de couplage respectives des guides de couplage $3_1$ de la zone élémentaire z1 soient en vis-à-vis, dans le plan XY, des parties de couplage des guides de couplage $3_2$ de la zone élémentaire z2, c'est-à-dire face à face, suivant l'axe longitudinal des guides d'onde de couplage au niveau des parties de couplage respectives, ici parallèle à l'axe X. De plus, les guides de couplage $3_1$ de la zone élémentaire z1 et ceux $3_2$ de la zone élémentaire z2 s'étendent respectivement, à partir de leurs parties de couplage respectives, suivant des directions opposées l'une à l'autre. Dans cet exemple, les guides de couplage $3_1$ de la zone élémentaire z1 s'étendent suivant la direction -X alors que les guides de couplage $3_2$ de la zone élémentaire z2 s'étendent suivant la direction +X. Chaque guide de couplage $3_1$ de la zone élémentaire z1 est positionné de manière coaxiale à un guide de couplage $3_2$ de la zone élémentaire z2.

De préférence, les guides d'onde de couplage $3_1$ de la zone élémentaire z1 et ceux $3_2$ de la zone élémentaire z2 s'étendent, à partir de leurs parties de couplage respectives, de manière à présenter, les uns vis-à-vis des autres, une symétrie axiale, ou symétrie miroir, par rapport à la ligne de séparation L12. Cela permet de simplifier la réalisation préalable des circuits photoniques, dans la mesure où il est alors possible d'utiliser un masque de photolithographie (*stepper*, en anglais) qui couvre optiquement l'ensemble E de zones élémentaires z1 à z4 adjacentes, et non plus, comme dans l'exemple de l'art antérieur, un masque pour chaque zone élémentaire. L'application de ce masque est alors répétée, ou photo-répétée, pour chacune des ensembles E de zones adjacentes.

En ce qui concerne les zones élémentaires adjacentes z1 et z4, les guides d'onde de couplage $3_1$ de la zone élémentaire z1 et les guides d'onde de couplage $3_4$ de la zone élémentaire z4 sont ici situés à proximité de la ligne de séparation L14. Plus précisément, les guides de couplage $3_1$ de la zone élémentaire z1 sont situés à une distance de la ligne de séparation L14 inférieure à celle les séparant de la ligne de séparation opposée et parallèle à la ligne L14. De même, les guides de couplage $3_4$ de la zone élémentaire z4 sont situés à une distance de la ligne de séparation L14 inférieure à celle les séparant de la ligne de séparation opposée et parallèle à la ligne L14.

De préférence, la diode $3_1$ de la zone élémentaire z1 la plus proche de la ligne de séparation L14 est située à une même distance de la ligne de séparation L14 que la diode $3_4$ de la zone élémentaire z4 la plus proche de la ligne L14. De la même manière, ces diodes voisines $3_1$, $3_4$ peuvent être espacées l'une de l'autre d'une distance qui peut être inférieure à 1,2$\mu$m, par exemple inférieure ou égale à 600$\mu$m, par exemple égale à 200$\mu$m environ. Cette distance peut être supérieure ou égale à une dizaine de microns, par exemple à 10$\mu$m voire à 50$\mu$m. On limite ainsi la surface de portion semiconductrice nécessaire à la réalisation des diodes des zones adjacentes d'un même ensemble E.

Par ailleurs, les guides d'onde de couplage de la zone élémentaire z1 et ceux de la zone élémentaire z4 s'étendent, à partir de leurs parties de couplage respectives, suivant des directions parallèles l'une à l'autre, ici suivant la direction -X. Dans cet exemple, les parties de couplage respectives des guides de couplage $3_1$ et celles des guides de couplage $3_4$ sont alignées suivant un axe parallèle aux lignes de séparation L12 et L34.

De préférence, les guides d'onde de couplage $3_1$ de la zone élémentaire z1 et ceux $3_4$ de la zone élémentaire z4 s'étendent, à partir de leurs parties de couplage respectives, de manière à présenter, les uns vis-à-vis des autres, une symétrie axiale par rapport à la ligne de séparation L14. Comme précédemment, cela permet ici de simplifier la réalisation préalable des circuits photoniques par l'application optique d'un masque de photolithographie (*stepper*, en anglais) commun à chaque ensemble E de zones élémentaires adjacentes.

En référence à la figure 5B, à titre d'exemple, pour réaliser les réseaux de diodes laser $2_1$, $2_2$, $2_3$, $2_4$ des quatre zones élémentaires adjacentes z1, z2, z3, z4 du même ensemble E, où chaque diode laser 2 présente une longueur Lf de 800$\mu$m environ pour une largeur lf de 50$\mu$m environ, et est espacée des diodes laser 2 voisines d'une distance de 200$\mu$m environ bord à bord, la vignette 6 présente une surface initiale nécessaire $S_{i,n}^{ens}$ supérieure à la surface initiale totale utile $S_{i,u}^{ens}$, celle-ci étant sensiblement égale à la somme des surfaces initiales utiles dites élémentaires $S_{i,n}^{elem}$ qui peuvent être ici, comme dans l'exemple de la fig.3, de l'ordre de 1x1mm$^2$.

Ainsi, pour obtenir une portion semiconductrice 7 qui présente continûment, sans rupture de matière, une surface initiale totale utile $S_{i,u}^{ens}$ sensiblement égale à $4xS_{i,u}^{elem}$, on prend en compte l'incertitude de positionnement de la vignette 6, ici de l'ordre de $\pm 200\mu$m environ, vis-à-vis des guides d'onde de couplage $3_1$, $3_2$, $3_3$, $3_4$ des zones élémentaires adjacentes z1, z2, z3, z4 du même ensemble E. De plus, on peut prendre en compte l'éventuelle sur-gravure latérale de la portion semiconductrice 6 lors de l'étape de suppression du substrat de croissance 7, par exemple de l'ordre de 300$\mu$m à partir de la bordure latérale 7l de la portion semiconductrice 7.

Ainsi, dans cet exemple, pour obtenir une surface initiale totale utile $S_{i,u}^{ens}$ de 4x(1x1)mm$^2$ environ, la vignette 6 peut alors présenter une surface initiale totale nécessaire $S_{i,n}^{ens}$ de 3x3=9mm$^2$ environ. En effet, une vignette 6 d'une surface $S_{i,n}^{ens}$ de 9mm² peut fournir une portion semiconductrice 7 d'une surface $S_1^{ens}$ de 2,4x2,4=5,8mm² environ après suppression du substrat de croissance 8 et sur-gravure latérale de 300μm de matériau semiconducteur à partir de la bordure latérale 7l de la portion semiconductrice 7. Cette surface $S_1^{ens}$ correspond alors à la surface initiale totale utile $S_{i,u}^{ens}$ augmentée de 200μm au niveau de la bordure latérale 7l de la portion semiconductrice 7, dans le plan XY, pour prendre en compte l'incertitude de positionnement.

Ainsi, à la différence de l'art antérieur, pour obtenir une surface initiale élémentaire utile $S_{i,u}^{elem}$ de 1x1mm² pour chaque zone élémentaire, l'utilisation d'une même vignette pour la réalisation des diodes des zones élémentaires adjacentes d'une surface initiale totale nécessaire $S_{i,n}^{ens}$ de 3x3=9mm², permet de ramener la surface initiale nécessaire $S_{i,n}^{elem}$, par zone élémentaire, à 9/4=2,5mm², au lieu des 4mm² comme dans l'exemple de la fig.3. Ainsi, par rapport à l'exemple de la fig.3, il en résulte que le surface initiale nécessaire $S_{i,n}^{elem}$ de matériau de la portion semiconductrice n'est plus que, par zone élémentaire, de l'ordre de 2,5 fois la surface initiale utile $S_{i,u}^{elem}$, ce qui se traduit par une diminution substantielle de la quantité de matériau semiconducteur nécessaire par zone élémentaire, et donc une diminution des coûts de fabrication. Il en résulte également une diminution de la perte de matériau de la portion semiconductrice, par zone élémentaire, correspondant à la différence entre la surface initiale nécessaire $S_{i,n}^{elem}$ et la surface initiale utile $S_{i,u}^{elem}$, ici de l'ordre de 60% dans cet exemple, et non plus de 75% comme dans l'exemple de la fig.3.

Le procédé de réalisation permet également, à nombre égal de puces optoélectroniques, d'utiliser et de manipuler un nombre réduit de plots, celui-ci étant divisé par 2 ou par 4 par rapport au nombre de plots de l'exemple de l'art antérieur. Il peut également permettre de manipuler des plots de plus grande taille. La complexité et la durée d'exécution du procédé en sont ainsi réduites.

A la différence de l'exemple de l'art antérieur, il est alors possible d'utiliser, pour la réalisation des circuits photoniques de chaque puce, un masque de photolithographie (*stepper*, en anglais) dont le motif est optiquement appliqué à un ensemble E de zones élémentaires adjacentes, et non plus à une seule zone élémentaire. Ainsi, le motif du masque appliqué optiquement pour chacun des ensembles E de zones adjacentes, et non plus pour chacune des zones élémentaires comme dans l'art antérieur. Cela permet de simplifier le procédé de réalisation et d'en réduire la durée d'exécution.

Alors que dans l'exemple de l'art antérieur, le motif du masque de lithographie est identique d'une zone élémentaire à l'autre, il est ici identique d'un ensemble E de zones adjacentes à l'autre. Au sein d'un même ensemble E, un premier sous-motif correspondant à une première zone élémentaire présente une symétrie miroir à un deuxième sous-motif correspondant à une deuxième zone élémentaire, celle-ci étant adjacente à la première zone élémentaire.

La figure 6A illustre de manière schématique et partielle une variante du mode représenté sur la figure 5A, dans laquelle les diodes $2_1$, $2_2$ des zones élémentaires adjacentes z1 et z2 sont réalisées à partir d'une même vignette, et les diodes $2_3$, $2_4$ des zones élémentaires adjacentes z3 et z4 sont réalisées à partir d'une autre vignette, distincte de la précédente. Les guides d'onde de couplage de la zone z1 présentent, au niveau de leurs parties de couplage respectives, une symétrie axiale par rapport à la ligne L12 vis-à-vis des guides d'onde de couplage de la zone z2. Il en est de même pour les guides de couplage de la zone z4 vis-à-vis de ceux de la zone z3 par rapport la ligne L34.

La figure 6B illustre de manière schématique et partielle une variante de celle représentée sur la figure 6A, dans laquelle les diodes $2_1$, $2_4$ des zones élémentaires adjacentes z1 et z4 sont réalisées à partir d'une même vignette, et les diodes $2_2$, $2_3$ des zones élémentaires adjacentes z2 et z3 sont réalisées à partir d'une autre vignette, distincte de la précédente. Les guides d'onde de couplage de la zone z1 présentent, au niveau de leurs parties de couplage respectives, une symétrie axiale par rapport à la ligne L14 vis-à-vis des guides d'onde de couplage de la zone z4. Il en est de même pour les guides de couplage de la zone z2 vis-à-vis de ceux de la zone z3 par rapport la ligne L23.

La figure 6C illustre de manière schématique et partielle une autre variante dans laquelle une même zone élémentaire comporte un transmetteur Tx à diodes laser, et un récepteur Rx à photodiodes. Dans cet exemple, le transmetteur Tx est identique à celui décrit précédemment et le récepteur Rx comporte un réseau de photodiodes couplées optiquement à un guide d'onde, lui-même couplé à un démultiplexeur, les guides d'onde et le démultiplexeur étant intégrés à l'intérieur du substrat de réception. Les transmetteurs Tx et récepteurs Rx peuvent comporter d'autres composants photoniques, tels que des coupleurs vers des fibres optiques.

Le procédé de réalisation collective des puces optoélectroniques comporte alors une étape de report de premiers plots, ou vignettes, où chaque première vignette, réalisée à base d'un premier composé semiconducteur, s'étend sur un ensemble E de plusieurs zones élémentaires adjacentes. Dans cet exemple, une même première vignette permet la réalisation des diodes laser d'un ensemble E des zones élémentaires adjacentes z12, z13, z22, z23.

Le procédé comporte également une étape de report de deuxièmes plots, ou vignettes, de nature différente, de préférence effectuée de manière simultanée à l'étape de report des premiers plots. Les deuxièmes plots sont réalisés à base d'un deuxième composé semiconducteur, identique ou différent du premier composé semiconducteur, et dont reportés sur un ensemble E' de plusieurs zones élémentaires adjacentes, cet ensemble E' étant différent de l'ensemble E mais peut comporter des zones élémentaires communes à ce dernier. Dans cet exemple, une même deuxième vignette permet la réalisation des photodiodes d'un ensemble E' des zones élémentaires adjacentes z21, z22, z31, z32. Il est donc distinct de l'ensemble E mais comporte, en commun avec ce dernier, la zone élémentaire z22.

Des modes de réalisation particuliers viennent d'être décrits. Différentes variantes et modifications apparaîtront à l'homme du métier.

Ainsi, chaque puce optoélectronique peut comporter un modulateur à électro-absorption, réalisé à base d'un troisième composé semiconducteur différent ou similaire du composé semiconducteur des diodes laser et/ou des photodiodes, et obtenu à partir d'un troisième plot ou vignette. Comme mentionné précédemment, les troisièmes vignettes peuvent être reportées sur un autre ensemble E" de plusieurs zones élémentaires adjacentes, cet ensemble E" étant distinct des ensembles E et E' mais peut comporter des zones élémentaires communes avec ces derniers.

Par ailleurs, chaque premier composant optoélectronique, tel qu'une diode laser, une photodiode ou un modulateur à électro-absorption, peut en outre être connecté électriquement à un circuit intégré présent dans la zone élémentaire correspondante. Le circuit intégré comporte ainsi des pistes électriquement conductrices situées à l'intérieur du substrat de réception, ainsi qu'une couche mince électriquement conductrice située à la surface du substrat de réception, sur laquelle repose le premier composant optoélectronique.

**Revendications**

1. Procédé de réalisation collective d'une pluralité de puces optoélectroniques (P1, P2), comportant les étapes suivantes :

    i) fourniture d'un substrat de réception (1), comportant une pluralité de zones dites élémentaires (z1, z2) destinées à délimiter chacune une puce optoélectronique (P1, P2), chaque zone élémentaire (z1, z2) comportant au moins un guide d'onde dit de couplage ($3_1$, $3_2$), intégré dans le substrat de réception (1), destiné à être couplé optiquement à un premier composant optoélectronique ($2_1$, $2_2$) ;
    ii) report d'une pluralité de plots (6) sur les zones élémentaires (z1, z2), de sorte que les plots (6) recouvrent partiellement les guides d'onde de couplage ($3_1$, $3_2$) ;
    iii) réalisation desdits premiers composants optoélectronique ($2_1$, $2_2$) à partir desdits plots (6), de sorte que chaque premier composant optoélectronique ($2_1$, $2_2$) soit en regard d'au moins un guide d'onde de couplage ($3_1$, $3_2$) de la zone élémentaire (z1, z2) correspondante ;
**caractérisé en ce que**, à la suite de l'étape de report, chaque plot (6) s'étend sur un ensemble (E) d'au moins deux zones élémentaires adjacentes (z1, z2), de manière à recouvrir partiellement au moins un guide d'onde de couplage ($3_1$, $3_2$) de chacune desdites zones élémentaires adjacentes (z1, z2).

2. Procédé selon la revendication 1, dans lequel, lors de l'étape de réalisation des premiers composants optoélectroniques, chacun des premiers composants optoélectroniques ($2_1$, $2_2$) réalisés à partir d'un même plot (6) est situé en regard d'un des guides d'onde de couplage ($3_1$, $3_2$) des zones élémentaires adjacentes (z1, z2) dudit même ensemble (E).

3. Procédé selon la revendication 1 ou 2, dans lequel, au moins un premier composant optoélectronique ($2_1$) d'une première zone élémentaire (z1) et au moins un deuxième composant optoélectronique ($2_2$) d'une deuxième zone élémentaire (z2) adjacente à la première zone élémentaire (z1) et appartenant audit même ensemble (E), lesdits premier et deuxième composant optoélectronique ($2_1$, $2_2$), étant réalisés à partir d'un même plot (6), sont respectivement espacés d'une distance égale d'une ligne de séparation (L12), formant une bordure commune auxdites première et deuxième zones élémentaires adjacentes (z1, z2).

4. Procédé selon la revendication 3, dans lequel ladite distance est inférieure à $600\,\mu$m.

5. Procédé selon la revendication 3 ou 4, dans lequel ledit premier composant optoélectronique ($2_1$) et ledit deuxième composant optoélectronique ($2_2$) sont espacés l'un de l'autre d'une distance inférieure à $1,2\,\mu$m.

6. Procédé selon l'une quelconque des revendications 1 à 5, dans lequel un premier composant optoélectronique ($2_1$) est situé en regard d'une portion de couplage ($3e_1$) d'un premier guide d'onde de couplage ($3_1$) d'une première zone élémentaire (z1) d'un ensemble (E), et un deuxième composant optoélectronique ($2_2$) est situé en regard d'une portion de couplage ($3e_2$) d'un deuxième guide d'onde de couplage ($3_2$) d'une deuxième zone élémentaire (z2) adjacente à la première zone élémentaire (z1) et appartenant audit même ensemble (E), les premier et deuxième guides d'onde de couplage ($3_1$, $3_2$) s'étendant, à partir de leurs parties de couplage ($3e_1$, $3e_2$) respectives, de manière parallèle.

**7.** Procédé selon la revendication 6, dans lequel lesdits premier et deuxième guides d'onde de couplage ($3_1$, $3_2$) s'étendent, à partir de leurs parties de couplage ($3e_1$, $3e_2$) respectives, suivant des directions opposées l'une à l'autre.

**8.** Procédé selon la revendication 6, dans lequel lesdits premier et deuxième guides d'onde de couplage ($3_1$, $3_2$) s'étendent, à partir de leurs parties de couplage ($3e_1$, $3e_2$) respectives, suivant des directions parallèles l'une à l'autre.

**9.** Procédé selon l'une quelconque des revendications 6 à 8, dans lequel le premier guide d'onde de couplage ($3_1$) et le deuxième guide d'onde ($3_2$) s'étendent, à partir de leurs parties de couplage ($3e_1$, $3e_2$) respectives, de manière à présenter, l'un vis-à-vis de l'autre, une symétrie axiale par rapport à ladite ligne de séparation (L12).

**10.** Procédé selon l'une quelconque des revendications 1 à 9, dans lequel chaque plot (6) s'étend sur un ensemble (E) de quatre zones élémentaires (z1, z2, z3, z4) adjacentes deux à deux.

**11.** Procédé selon l'une quelconque des revendications 1 à 10, dans lequel chaque plot (6) comporte une portion semiconductrice (7) réalisée à base d'un composé semiconducteur, et un substrat de croissance (8) à partir duquel est réalisée par épitaxie la portion semiconductrice (7).

**12.** Procédé selon la revendication 11, comportant une étape de suppression du substrat de croissance (8), celui-ci étant réalisé en un alliage à base dudit composé semiconducteur.

**13.** Procédé selon l'une quelconque des revendications 1 à 12, dans lequel chaque plot (6) comporte une portion semiconductrice (7) réalisée à base d'un composé semiconducteur III-V.

**14.** Procédé selon l'une quelconque des revendications 1 à 13, dans lequel le premier composant optoélectronique est une source laser, une photodiode ou un modulateur électro-optique.

**15.** Procédé selon l'une quelconque des revendications 1 à 14, dans lequel chaque zone élémentaire (z1, z2) dudit ensemble (E) comporte un réseau de plusieurs guides d'onde de couplage ($3_1$, $3_2$), et dans lequel, un réseau de plusieurs premiers composants optoélectroniques ($2_1$, $2_2$) est réalisé pour chacune des zones élémentaires (z1, z2) dudit ensemble (E), de sorte que les premiers composants optoélectroniques ($2_1$; $2_2$) d'un même réseau soient respectivement en regard des guides d'onde de couplage ($3_1$; $3_2$) correspondants.

**16.** Procédé selon l'une quelconque des revendications 1 à 15, comportant une étape de report d'une pluralité de premiers plots à partir desquels est réalisée une pluralité de diodes laser (2) et une étape de report d'une pluralité de deuxièmes plots à partir desquels est réalisée une pluralité de photodiodes (10) ou une pluralité de modulateurs électro-optique.

**Patentansprüche**

**1.** Verfahren zur kollektiven Herstellung einer Mehrzahl optoelektronischer Chips ($P_1$, $P_2$), aufweisend die folgenden Schritte:

i) Bereitstellen eines Aufnahmesubstrats (1), aufweisend eine Mehrzahl von Elementarbereichen ($z_1$, $z_2$), die dazu bestimmt sind, jeweils einen optoelektronischen Chip ($P_1$, $P_2$) zu begrenzen, wobei jeder Elementarbereich ($z_1$, $z_2$) mindestens einen Kopplungswellenleiter ($3_1$, $3_2$) aufweist, der in das Aufnahmesubstrat (1) integriert ist, der dazu bestimmt ist, optisch mit einer ersten optoelektronischen Komponente ($2_1$, $2_2$) gekoppelt zu sein;
ii) Übertragen einer Mehrzahl von Pads (6) auf die Elementarbereiche ($z_1$, $z_2$), so dass die Pads (6) die Kopplungswellenleiter ($3_1$, $3_2$) teilweise bedecken;
iii) Ausbilden der ersten optoelektronischen Komponenten ($2_1$, $2_2$) ausgehend von den Pads (6), so dass sich jede erste optoelektronische Komponente ($2_1$, $2_2$) gegenüber mindestens einem Kopplungswellenleiter ($3_1$, $3_2$) des entsprechenden Elementarbereichs ($z_1$, $z_2$) befindet; **dadurch gekennzeichnet, dass** sich nach dem Schritt des Übertragens jedes Pad (6) über eine Anordnung (E) mindestens zweier benachbarter Elementarbereiche ($z_1$, $z_2$) erstreckt, so dass mindestens ein Kopplungswellenleiter ($3_1$, $3_2$) jedes der benachbarten Elementarbereiche ($z_1$, $z_2$) bedeckt wird.

**2.** Verfahren nach Anspruch 1, wobei sich beim Schritt des Ausbildens der ersten optoelektronischen Komponenten jede der ersten optoelektronischen Komponenten ($2_1$; $2_2$), die ausgehend von einem selben Pad (6) ausgebildet werden, gegenüber eines der Kopplungswellenleiter ($3_1$, $3_2$) der benachbarten Elementarbereiche ($z_1$, $z_2$) derselben Anordnung (E) befindet.

**3.** Verfahren nach Anspruch 1 oder 2, wobei mindestens eine erste optoelektronische Komponente ($2_1$) eines ersten Elementarbereichs ($z_1$) und mindestens eine zweite optoelektronische Komponente ($2_2$) eines zweiten Elementarbereichs ($z_2$), der dem ersten Elementarbereich ($z_1$) benachbart ist und zur selben Anordnung (E) gehört, wobei die erste und zweite optoelektronische Komponente ($2_1$, $2_2$) ausgehend von einem selben Pad (6) ausgebildet sind, jeweils um einen gleichen Abstand von einer Trennlinie ($L_{12}$) beabstandet sind, die einen gemeinsamen Rand zum ersten und zweiten benachbarten Elementarbereich ($z_1$, $z_2$) bildet.

4. Verfahren nach Anspruch 3, wobei der Abstand geringer als 600 $\mu$m ist.

5. Verfahren nach Anspruch 3 oder 4, wobei die erste optoelektronische Komponente ($2_1$) und die zweite optoelektronische Komponente ($2_2$) um einen Abstand kleiner als 1,2 $\mu$m voneinander beabstandet sind.

6. Verfahren nach einem der Ansprüche 1 bis 5, wobei sich eine erste optoelektronische Komponente ($2_1$) gegenüber eines Kopplungsteilbereichs ($3e_1$) eines ersten Kopplungswellenleiters ($3_1$) eines ersten Elementarbereichs ($z_1$) einer Anordnung (E) und sich eine zweite optoelektronische Komponente ($2_2$) gegenüber eines Kopplungsteilbereichs ($3e_2$) eines zweiten Kopplungswellenleiters ($3_2$) eines zweiten Elementarbereichs ($z_2$), der dem ersten Elementarbereich ($z_1$) benachbart ist und zu derselben Anordnung (E) gehört, befindet, wobei sich der erste und zweite Kopplungswellenleiter ($3_1$, $3_2$) ausgehend von ihren jeweiligen Kopplungsabschnitten ($3e_1$, $3e_2$) parallel erstrecken.

7. Verfahren nach Anspruch 6, wobei sich der erste und zweite Kopplungswellenleiter ($3_1$, $3_2$) ausgehend von ihren jeweiligen Kopplungsabschnitten ($3e_1$, $3e_2$) in einander entgegengesetzten Richtungen erstrecken.

8. Verfahren nach Anspruch 6, wobei sich der erste und zweite Kopplungswellenleiter ($3_1$, $3_2$) ausgehend von ihren jeweiligen Kopplungsabschnitten ($3e_1$, $3e_2$) in zueinander parallelen Richtungen erstrecken.

9. Verfahren nach einem der Ansprüche 6 bis 8, wobei sich der erste Kopplungswellenleiter ($3_1$) und der zweite Wellenleiter ($3_2$) ausgehend von ihren jeweiligen Kopplungsabschnitten ($3e_1$, $3e_2$) so erstrecken, dass sie zueinander eine Axialsymmetrie bezogen auf die Trennlinie ($L_{12}$) aufweisen.

10. Verfahren nach einem der Ansprüche 1 bis 9, wobei sich jedes Pad (6) über eine Anordnung (E) von vier Elementarbereichen ($z_1$, $z_2$, $z_3$, $z_4$) erstreckt, die paarweise benachbart sind.

11. Verfahren nach einem der Ansprüche 1 bis 10, wobei jedes Pad (6) einen Halbleiterabschitt (7), der basierend auf einem Verbindungshalbleiter ausgebildet ist, und ein Wachstumssubstrat (8), ausgehend von welchem der Halbleiterabschitt (7) durch Epitaxie ausgebildet ist, aufweist.

12. Verfahren nach Anspruch 11, aufweisend einen Schritt des Entfernens des Wachstumssubstrats (8), wobei dieses aus einer Legierung basierend auf dem Verbindungshalbleiter ausgebildet ist.

13. Verfahren nach einem der Ansprüche 1 bis 12, wobei jedes Pad (6) einen Halbleiterabschitt (7) aufweist, der basierend auf einem III-V-Verbindungshalbleiter ausgebildet ist.

14. Verfahren nach einem der Ansprüche 1 bis 13, wobei die erste optoelektronische Komponente eine Laserquelle, eine Photodiode oder ein elektrooptischer Modulator ist.

15. Verfahren nach einem der Ansprüche 1 bis 14, wobei jeder Elementarbereich ($z_1$, $z_2$) der Anordnung (E) ein Netz aus mehreren Kopplungswellenleitern ($3_1$, $3_2$) aufweist und wobei ein Netz aus mehreren optoelektronischen Komponenten ($2_1$, $2_2$) für jeden der Elementarbereiche ($z_1$, $z_2$) der Anordnung (E) ausgebildet ist, so dass sich die ersten optoelektronischen Komponenten ($2_1$ ; $2_2$) eines selben Netzes jeweils gegenüber den entsprechenden Kopplungswellenleitern ($3_1$; $3_2$) befinden.

16. Verfahren nach einem der Ansprüche 1 bis 15, aufweisend einen Schritt des Übertragens einer Mehrzahl erster Pads, ausgehend von welchen eine Mehrzahl von Laserdioden (2) ausgebildet ist, und einen Schritt des Übertragens einer Mehrzahl zweiter Pads, ausgehend von welchen eine Mehrzahl von Photodioden (10) oder eine Mehrzahl elektrooptischer Modulatoren ausgebildet ist.

**Claims**

1. Process for producing, on the wafer-scale, a plurality of optoelectronic chips (P1, P2), comprising the following steps:

   i) providing a receiver substrate (1) comprising a plurality of so-called elementary zones (z1, z2) that are each intended to contain one optoelectronic chip (P1, P2), each elementary zone (z1, z2) comprising at least one so-called coupling waveguide ($3_1$, $3_2$) that is integrated into the receiver substrate (1) and that is intended to be optically coupled to a first optoelectronic component ($2_1$, $2_2$);
   ii) transferring a plurality of pads (6) to the elementary zones (z1, z2) so that the pads (6) partially cover the coupling waveguides ($3_1$, $3_2$);

iii) producing said first optoelectronic components ($2_1$, $2_2$) from said pads (6), so that each first optoelectronic component ($2_1$, $2_2$) is facing at least one coupling waveguide ($3_1$, $3_2$) of the corresponding elementary zone (z1, z2); **characterized in that**, following the transferring step, each pad (6) extends over a set (E) of at least two adjacent elementary zones (z1, z2), so as to partially cover at least one coupling waveguide ($3_1$, $3_2$) of each of said adjacent elementary zones (z1, z2).

2. Process according to Claim 1, wherein, in the step of producing the first optoelectronic components, each of the first optoelectronic components ($2_1$, $2_2$) produced from a given pad (6) is located facing one of the coupling waveguides ($3_1$, $3_2$) of the adjacent elementary zones (z1, z2) of said given set (E).

3. Process according to Claim 1 or 2, wherein at least one first optoelectronic component ($2_1$) of a first elementary zone (z1) and at least one second optoelectronic component ($2_2$) of a second elementary zone (z2) adjacent to the first elementary zone (z1) and belonging to said given set (E), said first and second optoelectronic components ($2_1$, $2_2$) being produced from the same pad (6), are respectively spaced apart by an equal distance from a separation line (L12) forming a common border to said first and second adjacent elementary zones (z1, z2).

4. Process according to Claim 3, wherein said distance is smaller than 600 $\mu$m.

5. Process according to Claim 3 or 4, wherein said first optoelectronic component ($2_1$) and said second optoelectronic component ($2_2$) are spaced apart from each other by a distance smaller than 1.2 $\mu$m.

6. Process according to any one of Claims 1 to 5, wherein a first optoelectronic component ($2_1$) is located facing a coupling portion ($3e_1$) of a first coupling waveguide ($3_1$) of a first elementary zone (z1) of a set (E), and a second optoelectronic component ($2_2$) is located facing a coupling portion ($3e_2$) of a second coupling waveguide ($3_2$) of a second elementary zone (z2) adjacent to the first elementary zone (z1) and belonging to said given set (E), the first and second coupling waveguides ($3_1$, $3_2$) extending, from their respective coupling portions ($3e_1$, $3e_2$), parallelly.

7. Process according to Claim 6, wherein said first and second coupling waveguides ($3_1$, $3_2$) extend, from their respective coupling portions ($3e_1$, $3e_2$), in opposite directions to each other.

8. Process according to Claim 6, wherein said first and second coupling waveguides ($3_1$, $3_2$) extend, from their respective coupling portions ($3e_1$, $3e_2$), in directions that are parallel to each other.

9. Process according to any one of Claims 6 to 8, wherein the first coupling waveguide ($3_1$) and the second waveguide ($3_2$) extend, from their respective coupling portions ($3e_1$, $3e_2$), so as to have, with respect to each other, an axial symmetry about said separation line (L12).

10. Process according to any one of Claims 1 to 9, wherein each pad (6) extends over a set (E) of four pairwise adjacent elementary zones (z1, z2, z3, z4).

11. Process according to any one of Claims 1 to 10, wherein each pad (6) comprises a semiconductor segment (7) based on a semiconductor compound, and a growth substrate (8) from which the semiconductor segment (7) is produced by epitaxy.

12. Process according to Claim 11, comprising a step of removing the growth substrate (8), the latter being made from an alloy based on said semiconductor compound.

13. Process according to any one of Claims 1 to 12, wherein each pad (6) comprises a semiconductor segment (7) based on a III-V semiconductor compound.

14. Process according to any one of Claims 1 to 13, wherein the first optoelectronic component is a laser source, a photodiode or an electro-optical modulator.

15. Process according to any one of Claims 1 to 14, wherein each elementary zone (z1, z2) of said set (E) comprises an array of a plurality of coupling waveguides ($3_1$, $3_2$), and wherein an array of a plurality of first optoelectronic components ($2_1$, $2_2$) is produced for each of the elementary zones (z1, z2) of said set (E), so that the first optoelectronic components ($2_1$; $2_2$) of a given array are respectively facing corresponding coupling waveguides ($3_1$; $3_2$).

16. Process according to any one of Claims 1 to 15, comprising a step of transferring a plurality of first pads from which a plurality of laser diodes (2) are produced and a step of transferring a plurality of second pads from which a plurality of photodiodes (10) or a plurality of electro-optical modulators are produced.

**Fig.1A**

**Fig.1B**

**Fig.2A**

**Fig.2B**

**Fig.2C**

**Fig.2D**

**Fig.3**

**Fig.4A**

**Fig.4B**

**Fig.4C**

**Fig.4D**

**Fig.5A**

**Fig.5B**

**Fig.6A**

**Fig.6B**

**Fig.6C**

**EP 3 538 937 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2016011002 A
- EP 2811593 A